# EUROPÄISCHE PATENTANMELDUNG

(11) **EP 1 400 307 A2**
(43) Veröffentlichungstag der Anmeldung: **24.03.2004**
(21) Anmeldenummer: 03020151.1
(22) Anmeldetag: 05.09.2003
(51) Int. Cl.: B23Q 11/00, B23Q 11/10

(54) **Aufbereitungseinrichtung für Späne enthaltende Kühl- und Schmiermittel**

(30) Priorität: 21.09.2002 DE 10244012
(71) Anmelder: Mann + Hummel GmbH, 71638 Ludwigsburg (DE)
(72) Erfinder: Leesen, René, 3770 Riemst (BE); Hamels, Frederik, 3770 Riemst (BE)
(74) Vertreter: Hoffmeister, Helmut, Dr.

(57) **Zusammenfassung**

Bei einer Aufbereitungseinrichtung für grobe Feststoffpartikel enthaltende Flüssigabfälle, insbesondere für Späne enthaltende Kühl- und Schmiermittel, mit einem Sammelbehälter (100) und einem darin umlaufenden Räumelement (122), mit dem die Produktionsrückstände zu wenigstens einem in dem Sammelbehälter (100) angeordneten Ansaugstutzen (11) wenigstens einer Transportpumpe gefördert werden, ist das Räumelement (122) an einer um wenigstens zwei Kettenräder (132, 134) umlaufenden Förderkette (120) befestigt, wobei wenigstens eines der Kettenräder (132, 134) angetrieben ist.

## Beschreibung

Die Erfindung betrifft eine Aufbereitungseinrichtung für grobe Feststoffpartikel enthaltende Flüssigabfälle, insbesondere für Späne enthaltende Kühl- und Schmiermittel, mit einem Sammelbehälter und wenigstens einem darin entlang einer Behälterwand und über einem Behälterboden umlaufenden Räumelement, mit dem die Produktionsrückstände zu wenigstens einem in dem Behälter angeordneten Ansaugstutzen wenigstens einer Transportpumpe gefördert werden.

Aus der DE 295 10 514 U1 ist eine solche Aufbereitungseinrichtung bekannt. Flüssige Medien mit Produktionsrückständen insbesondere Kühl- und Schmiermittel, in denen Metallspäne enthalten sind, werden in den Sammelbehälter der Aufbereitungseinrichtung eingeleitet. Vorzugsweise ist eine Zerkleinerungsvorrichtung für Späne oberhalb des Sammelbehälters angeordnet, so dass die Späne zunächst gebrochen werden und nur sehr kleine Partikel in den Bereich einer Transportpumpe gelangen. Bei der bekannten Aufbereitungseinrichtung ist ein zylindrischer Sammelbehälter vorgesehen, der nach oben offen ist und in den der Ansaugstutzen einer Transportpumpe hineinragt. Die in den Sammelbehälter aufgegebenen Fluide mit den darin enthaltenen Spänen und anderen Produktionsrückständen werden von einem Räumelement, das um eine zentrale Achse rotiert, in den Bereich des Ansaugstutzens der Transportpumpe gefördert. Durch das Räumelement wird verhindert, dass sich Anhäufungen der in den Fluid mitgeführten Produktionsrückstände dort bilden, wo der Aufgabenbereich vorgesehen ist. Vielmehr wird durch das ständig rotierende Räumelement eine gleichmäßige Verteilung der Feststoffe innerhalb der Flüssigkeit bewirkt, so dass dieses Gemisch von der Transportpumpe weiter gefördert werden kann.

Es hat sich allerdings gezeigt, dass das Volumen des Sammelbehälters of nicht ausreichend ist. Auch ist die Bauhöhe so groß, dass der Sammelbehälter nicht mehr unterhalb von Anlagenteilen, beispielsweise unter dem Späneförderer einer Werkzeugmaschine, platziert werden kann. Eine einfache Verringerung der Behälterwandhöhe würde das knappe Volumen jedoch zusätzlich verringern.

Es stellt sich daher die Aufgabe, bei einer Aufbereitungseinrichtung der eingangs genannten Art das Sammelbehältervolumen zu vergrößern und zugleich eine platzsparende Aufstellung zu ermöglichen.

Diese Aufgabe wird erfindungsgemäß dadurch gelöst, dass das wenigstens eine Räumelement an einer um wenigstens zwei Kettenräder umlaufenden Förderkette befestigt ist, wobei wenigstens eines der Kettenräder angetrieben ist.

Die erfindungsgemäße Aufbereitungseinrichtung stellt ein großes Sammelbehältervolumen bei niedriger Bauhöhe bereit, so dass auch ein Pufferspeicher für die umzupumpenden Produktionsrückstände geschaffen wird, mit dem kurzfristige Schwankungen ausgeglichen werden können.

Durch die Führung des Räumelements an einer Förderkette ist es möglich, verschiedene Geometrien des Sammelbehälters auszubilden, welche den örtlichen Gegebenheiten und den Platzverhältnissen im Bereich der Werkzeugmaschine angepasst sein können. Mit dem kettengeführten Räumelement wird ebenso wie bei dem bekannten rotierenden Räumelement erreicht, dass die Feststoffpartikel innerhalb des Sammelbehälters bis zu einer Transportpumpe gefördert werden. Um die Absaugleistung zu verbessern, können auch mehrere Transportpumpe vorgesehen sein.

Mit der erfindungsgemäßen Führung an einer Förderkette des Räumelements sind nahezu beliebige Behälterformen möglich. So sind U-förmige oder L-förmige Bodenplatten des Sammelbehälters denkbar, mit denen die Aufbereitungseinrichtung bestmöglich an die Abmessungen der Werkzeugmaschine anpassbar ist.

Insbesondere ist eine Ausführungsform vorteilhaft, wobei der Querschnitt des Sammelbehälters bzw. die Kontur der Bodenplatte aus zwei sich spiegelbildlich gegenüberliegenden Halbkreisbereichen und einem dazwischen liegenden Rechteckbereich gebildet ist. Diese Form, die ähnlich zu einem Eishockey-Spielfeld ist, ist besonders einfach aufzubauen und bietet gleichzeitig ein großes Behältervolumen. Der dazwischen gefügte Rechteckbereich kann in seiner Länge variiert werden, so dass sehr lange, zugleich aber schmale und platzsparende Formen des Sammelbehälters möglich sind.

Vorteilhaft ist es dabei insbesondere, wenn die Rotationsachsen der Kettenräder deckungsgleich mit den Zentren der Halbkreisbereiche sind. Hierdurch wird erreicht, dass das Räumelement immer nahestmöglich an der Behälterwand entlang geführt ist.

In einer bevorzugten Ausführungsform erstreckt sich das Räumelement von der Förderkette weg nach außen in Richtung der Behälterwand. Der Ansaugstutzen der Transportpumpe ist dabei außerhalb des von der Förderkette umspannten Umfangs angeordnet. Durch diese Anordnung ist die Befestigung der Räumelemente an der Förderkette besonders einfach zu erreichen, beispielsweise durch einfache Klemmklötze.

Möglich ist es aber auch, dass sich das Räumelement wenigstens teilweise ins Innere des von der Förderkette umspannten Umfangs erstreckt und der Ansaugstutzen ebenfalls innerhalb dieses Umfangs angeordnet ist.

Erfindungsgemäß sind auch weitere Bodenplattenformen möglich, wobei die Bodenplatte des Sammelbehälters stets der von dem Räumelement überstrichenen Fläche entspricht bzw. geometrisch ähnlich zu dieser ist, d. h., um eine bestimmte Luftspaltbreite versetzt nach außen ist. Hierdurch entsteht eine Bodenplattenform, die geometrisch ähnlich zu der überstrichenen Fläche ist.

Abgesehen von der zuvor beschriebenen Form sind auch ovale oder ellipsoide Bodenplatten möglich, wofür dann mehr als zwei Kettenräder vorgesehen sind, um die Förderkette aufzuspannen und ihren Verlauf entsprechend der Form der Behälterwand anzupassen.

Ausführungsbeispiele der Erfindung werden nachfolgend mit Bezug auf die Zeichnung näher erläutert. Die Figuren zeigen im Einzelnen:
- Fig. 1: eine erste Ausführungsform der erfindungsgemäßen Aufbereitungseinrichtung im Schnitt;
- Fig. 2: die Aufbereitungseinrichtung aus Fig. 1 in einer schematisierten Draufsicht; und
- Fig. 3: eine zweite Ausführungsform der erfindungsgemäßen Aufbereitungseinrichtung, in schematisierter Draufsicht.

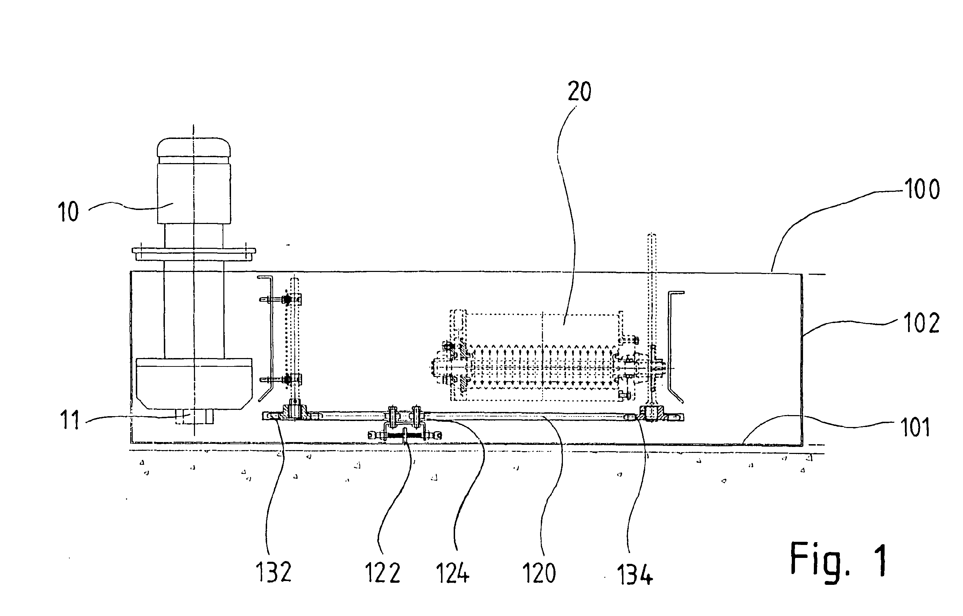

Fig. 1 zeigt eine Aufbereitungseinrichtung, deren Sammelbehälter 100 aus einer Bodenplatte 101 und einer diese umfassende Behälterwand 102 besteht, deren Höhe so gewählt ist, dass von wenigstens einem Räumelement 122 mitgeführte Feststoffe, insbesondere Späne, im normalen Betrieb nicht über die Oberkante der Behälterwand 102 gelangen können. Innerhalb des Sammelbehälters 100, jedoch oberhalb der Räumelemente, ist eine Spänezerkleinerungsvorrichtung 20 angeordnet, die lange Fließspäne häckselt, um sie pneumatisch fördern zu können. Bei kurzen Spänen ist die Spänezerkleinerungsvorrichtung 20 nicht erforderlich.

Das Räumelement 122 ist mit einem Befestigungselement 124 an einer Förderkette 120 befestigt. Die Förderkette 120 ist um zwei Kettenräder 132, 134 gespannt, von denen wenigstens eines motorisch angetrieben ist.

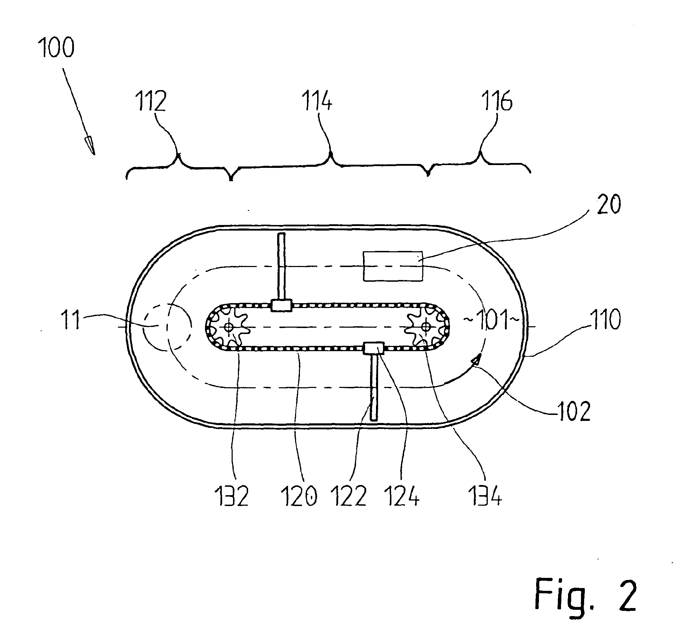

Wie Fig. 2 zeigt, ist die Bodenplatte 101 in dieser Ausführungsform aus zwei spiegelbildlich gegenüber liegenden Halbkreisbereichen 112, 116 und einem dazwischen liegenden Rechteckbereich 114 zusammengesetzt. Das Räumelement 122 läuft in der durch den Pfeil 102 dargestellten Richtung um, wobei das von der Förderkette 120 abgewandte freie Ende des Räumelements 122 nahe an der Behälterwand 102 entlang läuft .

Bei der Zerkleinerungsvorrichtung 20 aufgegebene Feststoffanteile in der umzupumpenden Flüssigkeit werden somit durch die Räumelemente 122 in den Bereich des Ansaugstutzens 11 einer Transportpumpe 10 gefördert.

Die Räumelemente 122 können, wie in Fig. 2 abgebildet, gerade ausgeführt sein, sie können aber auch sichelartig gekrümmt sein, um Ablagerungen der Feststoffe an den Innenund Außenkanten der Umlaufbahn zu vermeiden und um das zu fördernde Gut zu dem Ansaugstutzen 11 zu fördern.

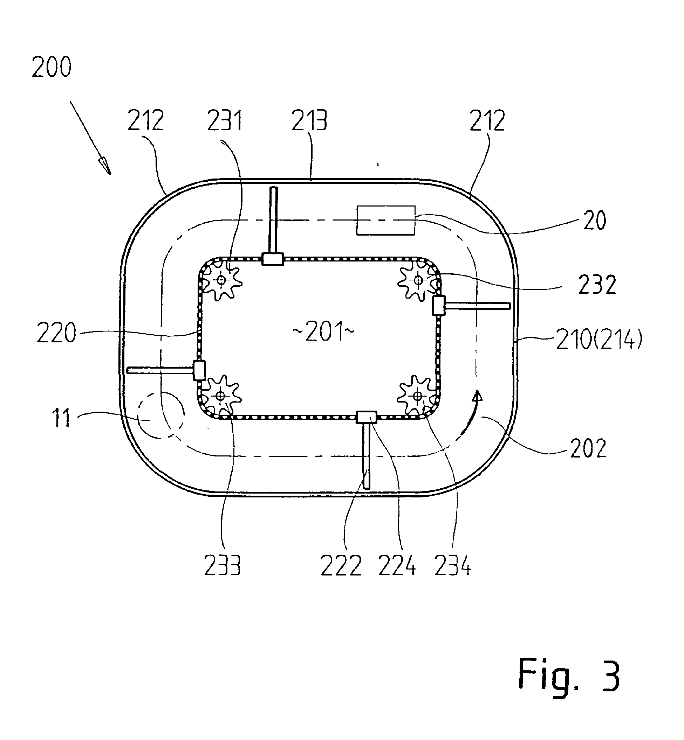

In Fig. 3 ist eine weitere Ausführungsform einer Aufbereitungseinrichtung dargestellt, deren Sammelbehälter 200 eine Bodenplatte 201 aufweist, die eine im Wesentlichen rechteckige oder quadratische Ausgangsform mit deutlichen Rundungen an den Ecken besitzt. Die die Bodenplatte 201 umschließende Behälterwand 202 setzt sich folglich bei einer rechteckigen Grundform aus viertelbogenförmigen Eckbereichen 212, langen geraden Abschnitten 213 und kurzen geraden Abschnitten 214 zusammen. Im Inneren des Sammelbehälters ist eine Förderkette 220 aufgespannt, die um vier Kettenräder 231,...,234 umläuft. An der Förderkette sind mehrere Räumelemente 222 über Befestigungselemente 224 befestigt. Durch die angetriebene Förderkette 220 werden die Raumelemente 222 in Richtung des Pfeils 202 bewegt. Die an einer Zerkleinerungsvorrichtung 20 aufgegebenen Feststoffanteile, insbesondere Metallspäne, werden von den Räumelementen 222 erfasst und bis zum Ansaugstutzen 11 einer Transportpumpe 10 gefördert.

## Patentansprüche

1. Aufbereitungseinrichtung für grobe Feststoffpartikel enthaltende Flüssigabfälle, insbesondere für Späne enthaltende Kühl- und Schmiermittel,
mit einem Sammelbehälter (100; 200) und wenigstens einem darin entlang einer Behälterwand (102; 202) und über einem Behälterboden (101; 201) umlaufenden Räumelement (122; 222), mit dem die Produktionsrückstände zu wenigstens einem in dem Sammelbehälter (100; 200) angeordneten Ansaugstutzen (11) wenigstens einer Transportpumpe (10) gefördert werden,
**dadurch gekennzeichnet, dass** das wenigstens eine Räumelement (122; 222) an einer um wenigstens zwei Kettenräder (132, 134; 231,...,234) umlaufenden Förderkette (120; 220) befestigt ist, wobei wenigstens eines der Kettenräder (132, 134; 231,...,234) angetrieben ist.

2. Aufbereitungseinrichtung nach Anspruch 1, **dadurch gekennzeichnet, dass** der Querschnitt des Sammelbehälters (100; 200) in Form von zwei spiegelbildlich gegenüberliegenden Halbkreisbereichen (112, 116) mit einem dazwischen eingefügten Rechteckbereich (114) ausgebildet ist.

3. Aufbereitungseinrichtung nach Anspruch 2, **dadurch gekennzeichnet, dass** die Rotationsachsen der Kettenräder (132, 134) deckungsgleich mit den Zentren der Halbkreisbereiche (112, 116) des Sammelbehälters (100) sind.

4. Aufbereitungseinrichtung nach Anspruch 1, **dadurch gekennzeichnet, dass** die Grundplatte des Sammelbehälters oval oder ellipsoid ist.

5. Aufbereitungseinrichtung nach einem der Ansprüche 1 bis 4, **dadurch gekennzeichnet, dass** das wenigstens eine Räumelement (122; 222) sich von der Förderkette (120; 220) nach außen erstreckt und der Ansaugstutzen (11) außerhalb des von der Förderkette (120; 220) umspannten Umfangs angeordnet ist.

6. Aufbereitungseinrichtung nach einem der Ansprüche 1 bis 5, **dadurch gekennzeichnet, dass** das wenigstens eine Räumelement sich wenigstens teilweise ins Innere des von der Förderkette umspannten Umfangs erstreckt und der Ansaugstutzen innerhalb des von der Förderkette umspannten Umfangs angeordnet ist.

7. Aufbereitungseinrichtung nach einem der Ansprüche 1 bis 5, **dadurch gekennzeichnet, dass** die Förderkette um wenigstens drei Kettenräder umläuft und dass die Grundfläche des Sammelbehälters der von dem Räumelement überstrichenen Fläche entspricht oder geometrisch ähnlich zu dieser ist.

8. Aufbereitungseinrichtung nach Anspruch 7, **dadurch gekennzeichnet, dass** die Förderkette (220) in einer rechteckigen Konfiguration um vier Kettenräder (231,..., 234) umläuft.

9. Aufbereitungseinrichtung nach einem der Ansprüche 1 bis 5, **dadurch gekennzeichnet, dass** oberhalb der Räumelemente (122; 222) eine Spänezerkleinerungsvorrichtung (20) angeordnet ist.
